# EUROPÄISCHE PATENTSCHRIFT

(11) **EP 2 820 025 B1**
(45) Veröffentlichungstag und Bekanntmachung des Hinweises auf die Patenterteilung: **17.02.2016**
(21) Anmeldenummer: 13708115.4
(22) Anmeldetag: 26.02.2013
(51) Int. Cl.: C07F 7/18, C08L 83/04

(54) **VERNETZBARE MASSEN AUF DER BASIS VON ORGANOSILICIUMVERBINDUNGEN**
CROSS-LINKABLE COMPOSITIONS BASED ON ORGANOSILICON COMPOUNDS
MATIÈRES RÉTICULABLES À BASE DE COMPOSÉS ORGANOSILICIÉS

(30) Priorität: 01.03.2012 DE 102012203273
(43) Veröffentlichungstag der Anmeldung: 07.01.2015
(73) Patentinhaber: Wacker Chemie AG, 81737 München (DE)
(72) Erfinder: PRASSE, Marko, 01612 Glaubitz (DE); BROOK, Michael A., Ancaster, Ontario L9G 4M4 (CA); SCHEIM, Uwe, 01640 Coswig (DE); CHEN, Yang, Ancaster, Ontario L9K 1K5 (CA)
(74) Vertreter: Budczinski, Angelika
(86) Internationale Anmeldenummer: PCT/EP2013/053790
(87) Internationale Veröffentlichungsnummer: WO 2013/127774

(56) Entgegenhaltungen:
- US-B2- 7 998 588

## Beschreibung

Die Erfindung betrifft unter Ausschluss von Wasser lagerfähige, bei Zutritt von Wasser bei Raumtemperatur zu Elastomeren vernetzbare Massen auf der Basis von Organosiliciumverbindungen, wobei die Elastomere hydrophile Oberflächen aufweisen, Verfahren zu deren Herstellung sowie deren Verwendung.

Vernetzbare Massen auf der Basis von Organosiliciumverbindungen mit unterschiedlichen Arten von Einsatzstoffen sind vielfach bekannt, wie z.B. unter Ausschluss von Wasser lagerfähige, bei Zutritt von Wasser bei Raumtemperatur zu Elastomeren vulkanisierende Einkomponenten-Dichtmassen (RTV-1). Diese Produkte werden in großen Mengen z.B. in der Bauindustrie eingesetzt. Die Basis dieser Mischungen sind Polymere, die durch Silylgruppen terminiert sind, die reaktive Substituenten wie OH-Gruppen oder hydrolysierbare Gruppen, wie etwa Alkoxygruppen, tragen. Üblicherweise sind solche Massen bzw. deren Vulkanisate hydrophob, Wassertropfen laufen schlecht ab und trocknen an der Oberfläche ein. Dadurch lagern sich Stoffe, die im Wasser gelöst oder verteilt sind, nach dem Abtrocknen auf der Oberfläche ab.

Es ist also wünschenswert bei Zutritt von Wasser bei Raumtemperatur zu Elastomeren vulkanisierende Einkomponenten-Dichtmassen zu erhalten, die eine hydrophile Oberfläche aufweisen und dadurch schneller abtrocknen und weniger Ablagerungen aufweisen.

EP 1 036 820 A beschreibt RTV-1 Alkoxymassen mit Tensiden. Die Tenside können sein Polyethylenglykole, die beidseitig C6-C20-Alkylendgruppen aufweisen, oder Polydimethylsiloxan mit Polyethergruppen.

EP 1 803 777 A beschreibt RTV-1 Massen mit Polyether, wobei die Polyether silyliert sein können. Die Polyether sind OH-endständig.

In US 7,998,588 A werden RTV-1-Massen beschrieben, welche einseitig oder beidseitig silylierte Polyether enthalten. Die einseitig silylierten Polyether können auf der anderen Seite einen Alkylrest mit bis zu 6 Kohlenstoffatomen enthalten.

Gegenstand der Erfindung sind unter Ausschluss von Wasser lagerfähige, bei Zutritt von Wasser bei Raumtemperatur zu Elastomeren vernetzbare, einkomponentige Massen auf der Basis von Organosiliciumverbindungen enthaltend Verbindungen der Formel

(R¹O) ₐR₃₋ₐSi-A-O(CH₂CH₂-O)ₓ-R² (I),

wobei
R gleich oder verschieden sein kann und einen einwertigen, gegebenenfalls substituierten Kohlenwasserstoffrest darstellt,
R¹ gleich oder verschieden sein kann und Wasserstoffatom oder einwertigen, gegebenenfalls substituierten Kohlenwasserstoffrest darstellt,
A einen zweiwertigen jeweils über Kohlenstoff an Si und O gebundenen, gegebenenfalls substituierten Kohlenwasserstoffrest bedeutet, der gegebenenfalls Hydroxyl-, Erster- (-O-C(=O)-), Amid- (-N-C(=O)-), Urethan- (-O-C(=O)-NH-), Urea- (-N-C(=O)-NH-), Thioester- (-S-C(=O)-), Thioether- (-S-), Ether- (-O-), Imin- (-NH-) und/oder Carbonylgruppen (-C(=O)-) enthält,
R² einen einwertigen über Kohlenstoff an 0 gebundenen, linearen oder verzweigten Kohlenwasserstoffrest mit 8 bis 22 Kohlenstoffatomen darstellt, wobei ein Kohlenstoffatom durch ein Siliciumatom ersetzt sein kann,
a 1, 2 oder 3, bevorzugt 2 oder 3, insbesondere 3, ist und
x eine ganze Zahl von 1 bis 20, bevorzugt eine ganze Zahl von 2 bis 15, besonders bevorzugt eine ganze Zahl von 2 bis 10, ist.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Bevorzugt handelt es sich bei Rest R um Kohlenwasserstoffreste mit 1 bis 12 Kohlenstoffatomen, besonders bevorzugt um Methyl-, Ethyl-, Vinyl- und Phenylreste, insbesondere um den Methylrest.

Beispiele für gegebenenfalls substituierte Kohlenwasserstoffreste R¹ sind die für Rest R angegebenen Beispiele.

Bei den Resten R¹ handelt es sich vorzugsweise um Wasserstoffatom und Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Wasserstoffatom, Methyl- und Ethylrest.

Beispiele für Reste R² sind die für Rest R angegebenen Beispiele mit 8 bis 22 Kohlenstoffatomen sowie Alkylreste, wie der Lauryl-, iso-Tridecyl-, Palmitoyl- und Stearylrest; Cycloalkylreste, wie der Cyclohexylbutylrest; Alkenylreste, wie der Undecenyl-, Hexadecenyl- und Oleylrest; sowie um Reste, bei denen ein Kohlenstoffatom durch ein Siliciumatom ersetzt ist, wie der 3-(Triethylsilyl)propyl- oder der 3-(Tri-n-hexylsilyl)propylrest.

Bei den Resten R² handelt es sich vorzugsweise um Kohlenwasserstoffreste mit 8 bis 20 Kohlenstoffatomen, insbesondere um Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Tridecylreste, wie der iso-Tridecylrest; Hexadecylreste, wie der n-Hexadecylrest; Octadecylreste, wie der n-Octadecylrest; Cycloalkylreste, wie der 4-Cyclohexyl-butylrest und Alkenylreste, wie der Undecenyl-, Hexadecenyl- und Oleylrest.

Bevorzugte Reste für A sind
-CH₂CH₂CH₂OCH₂CH(OH)CH₂OC(=O)CH₂- ,
-CH₂CH₂CH₂OCH₂CH(CH₂(OC))OC(=O)CH₂-,
-CH₂CH₂CH₂CH₂CH(OH)CH₂OC(=O)CH₂-,
-CH₂CH₂CH₂CH₂CH(CH₂OH)OC(=O)CH₂-, 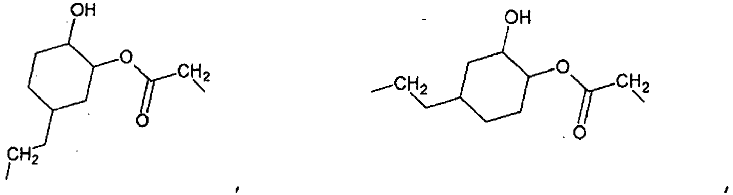 -C(=O)-NH-CH₂-CH₂-CH₂-, -C(=O)-NH-CH2-, -CH₂CH₂CH₂NHC(=O)CH₂-,
-CH₂CH₂CH₂NHCH₂CH₂NHC(=O)CH₂-, -CH₂CH₂CH₂S-C(=O)CH₂-,
-CH₂CH₂CH₂NHC(=O)NH-CH(CH₃)CH₂-, -C(=O) CH(CH₃)CH₂NHCH₂CH₂CH₂-,
-C(=O)CH₂CH₂-NHCH₂CH₂CH₂-, -C(=O)C(CH₃)₂NHCH₂CH₂CH₂-,
-C(=O)CH(CH₃)-NHCH₂CH₂CH₂-, -C(=O)CH(CH₃)CH₂NHCH₂CH₂NHCH₂CH₂CH₂-, -C(=O)C(CH₃)₂NHCH₂CH₂NHCH₂CH₂CH₂-,
-CH₂CH₂CH₂-, -CH₂-, -C(=O)CH₂CH₂NHCH₂CH₂NHCH₂CH₂CH₂-,
-C(=O)CH(CH₃)NHCH₂CH₂NHCH₂CH₂CH₂-,
-CH₂CH₂CH₂NHCH₂CH(OH)CH₂-, -CH₂CH₂CH₂NHCH₂CH₂NHCH₂CH (OH) CH₂-,
-CH₂CH₂CH₂SCH₂CH(OH)CH₂-, -CH₂CH₂CH₂NHCH(CH₂OH)CH₂- ,
-CH₂CH₂CH₂NHCH₂CH₂NHCH(CH₂OH)CH₂- und -CH₂CH₂CH₂SCH(CH₂OH)CH₂-.

Besonders bevorzugt handelt es sich bei Rest A um
-CH₂CH₂CH₂OCH₂CH(OH)CH₂OC(=O)CH₂-,
-CH₂CH₂CH₂OCH₂CH(CH₂(OH)) OC(=O)CH₂-, -C(=O)-NH-CH₂-CH₂-CH₂-,
-C(=O)-NH-CH₂-, -CH₂CH₂CH₂NHC(=O)CH₂-,
-CH₂CH₂CH₂NHCH₂CH₂NHC(=O)CH₂-, -CH₂CH₂CH₂NHC(=O)NH-CH(CH₃)CH₂-,
-C(=O)CH(CH₃)CH₂NHCH₂CH₂CH₂-, -C(=O)CH₂CH₂-NHCH₂CH₂CH₂-,
-C(=O)C(CH₃)₂NHCH₂CH₂CH₂-, -C(=O)CH(CH₃)NHCH₂CH₂CH₂ - ,
- C(=O)CH(CH₃)CH₂NHCH₂CH₂NHCH₂CH₂CH₂
-C(=O)C(CH₃)₂NHCH₂CH₂NHCH₂CH₂CH₂-, -CH₂CH₂CH₂-, -CH₂-,
-C(=O)CH₂CH₂NHCH₂CH₂NHCH₂CH₂CH₂ -,
-C(=O)CH(CH₃)NHCH₂CH₂NHCH₂CH₂CH₂-,
-CH₂CH₂CH₂NHCH₂CH(OH)CH₂-, -CH₂CH₂CH₂NHCH₂CH₂NHCH₂CH(OH)CH₂-, -CH₂CH₂CH₂NHCH(CH₂OH)CH₂- oder -CH₂CH₂CH₂NHCH₂CH₂NHCH(CH₂OH)CH₂.

Beispiele für Verbindungen der Formel (I) sind (MeO)₃Si-CH₂CH₂CH₂OCH₂CH(OH)CH₂OC(=O)CH₂-O(CH₂CH₂O)₂₋₆-C₈H₁₇, (EtO)₂MeSi-CH₂CH₂CH₂OCH₂CH(OH)CH₂OC(=O)CH₂-O(CH₂CH₂O)₂₋₆-C₈H₁₇, (MeO) ₃Si-CH₂CH₂CH₂OCH₂CH(OH)CH₂OC(=O)CH₂-O(CH₂CH₂O)₅₋₈-(CH₂)₁₁₋₁₃CH₃, (EtO)₃Si-CH₂CH₂CH₂OCH₂CH(OH)CH₂OC(=O)CH₂-O(CH₂CH₂O)₂₋₆-(CH₂)₁₁₋₁₃CH₃, (MeO)₂MeSi-CH₂CH₂CH₂OCH₂CH(OH)CH₂OC(=O)CH₂-O(CH₂CH₂O)₈₋₁₂-iso-C₁₃H₂₇, (EtO)₃Si-CH₂CH₂CH₂OCH₂CH(OH)CH₂OC(=O)CH₂-O(CH₂CH₂O)₂₋₆-iso-C₁₃H₂₇, (MeO)₂HOSi-CH₂CH₂CH₂OCH₂CH(OH)CH₂OC(=O)CH₂-O(CH₂CH₂O)₂₋₆-(CH₂)₈CH=CH(CH₂)₅₋₇CH₃, (HO)₃Si-CH₂CH₂CH₂OCH₂CH(OH)CH₂OC(=O)CH₂-O(CH₂CH₂O)₂₋₆-(CH₂)₈CH=CH(CH₂)₅₋₇CH₃, (MeO)₂MeSi-CH₂CH₂CH₂OCH₂CH(CH₂OH)OC(=O)CH₂-O(CH₂CH₂O)₂₋₆-C₈H₁₇, (EtO)₃Si-CH₂CH₂CH₂OCH₂CH(CH₂OH)OC(=O)CH₂-O(CH₂CH₂O)₂₋₆-C₈H₁₇, (MeO)₃Si-CH₂CH₂CH₂OCH₂CH(CH₂OH)OC(=O)CH₂-O(CH₂CH₂O)₅₋₈-(CH₂)₁₁₋₁₃CH₃, (EtO)₂HOSi-CH₂CH₂CH₂OCH₂CH(CH₂OH)OC(=O)CH₂-O(CH₂CH₂O)₂₋₆-(CH₂)₁₁₋₁₃CH₃, (MeO)₃Si-CH₂CH₂CH₂OCH₂CH(CH₂OH)OC(=O)CH₂-O(CH₂CH₂O)₈₋₁₂-iso-C₁₃H₂₇, (EtO)₃Si-CH₂CH₂CH₂OCH₂CH(CH₂(OH))OC(=O)CH₂-O(CH₂CH₂O)₂₋₆-iso-C₁₃H₂₇, (MeO)(HO)₂Si-CH₂CH₂CH₂OCH₂CH(CH₂OH)OC(=O)CH₂-O(CH₂CH₂O)₂₋₆-(CH₂)₈CH=CH(CH₂)₅-₇CH₃, (EtO)₃Si-CH₂CH₂CH₂OCH₂CH(CH_{2O}H)OC(=O)CH2-O(CH₂CH₂O)₂₋₆-(CH₂)₈CH=CH(CH₂₎₅₋₇CH₃, (MeO)₃Si-CH₂CH₂CH₂CH₂CH(OH)CH₂OC(=O)CH₂-O(CH₂CH₂O)₂₋₆-C₈H₁₇, (EtO)₂MeSi-CH₂CH₂CH₂CH₂CH(OH)CH₂OC(=O)CH₂-O(CH₂CH₂O)₂₋₆-C₈H₁₇, (MeO)₂MeSi-CH₂CH₂CH₂CH₂CH(CH₂OH)OC(=O)CH₂-O(CH₂CH₂O)₂₋₆-C₈H₁₇, (EtO)₃Si-CH₂CH₂CH₂CH₂CH(CH₂OH)OC(=O)CH₂-O(CH₂CH₂O)₂₋₆-C₈H₁₇, 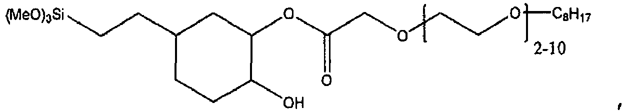 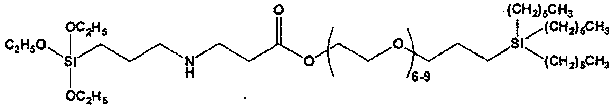 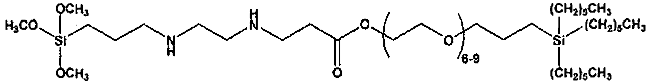 (MeO)₃Si-CH₂CH₂CH₂NC(=O)-O(CH₂CH₂O)₂₋₆-C₈H₁₇, (EtO)₃SiCH₂NC(=O)-O(CH₂CH₂O)₂₋₆-C₈H₁₇, (EtO)₂MeSiCH₂NC(=O)-O(CH₂CH_{2O})₂₋₆-C₈H₁₇, (MeO)₂MeSi-CH₂CH₂CH₂NHC(=O)CH₂-O(CH₂CH₂O)₂₋₆-C₈H₁₇, (MeO)₃Si-CH₂CH₂CH₂NHCH₂CH₂NHC(=O)CH₂-O(CH₂CH₂O)₅₋₈-(CH₂)₁₁₋₁₃CH₃, (MeO)₃Si-CH₂CH₂CH₂NHC(=O)NHCH(CH₃)CH₂-O(CH₂CH₂O)₂₋₆-(CH₂)₁₁₋₁₃CH₃, (EtO)₂MeSi-CH₂NHC(=O)NHCH(CH₃)CH₂-O(CH₂CH₂O)₂₋₆-(CH₂)₁₁₋₁₃CH₃, (MeO)₂MeSi-CH₂CH₂CH₂NHCH₂CH₂C(=O)-O(CH₂CH₂O)₈₋₁₂-iso-C₁₃H₂₇, (MeO)₂MeSi-CH₂CH₂CH₂NHCH(CH₃)C(=O)-O(CH₂CH₂O)₈₋₁₂-iso-C₁₃H₂₇, (MeO)₂MeSi-CH₂CH₂CH₂NHCH₂CH(CH₃)C(=O)-O(CH₂CH₂O)₈₋₁₂-iso-C₁₃H₂₇, (MeO)₂MeSi-CH₂CH₂CH₂NHC(CH₃)₂C(=O)-P(CH₂CH₂O)₈₋₁₂-iso-C₁₃H₂₇, (MeO)₃Si-CH₂CH₂CH₂NHCH₂CH₂NHCH₂CH₂C(=O)-O(CH₂CH₂O)₈₋₁₂-iso-C₁₃H₂₇, (MeO)₃Si-CH₂CH₂CH₂NHCH₂CH₂NHCH(CH₃)C(=O)-O(CH₂CH₂O)₈₋₁₂-iso-C₁₃H₂₇, (MeO)₃Si-CH₂CH₂CH₂NHCH₂CH₂NHCH₂CH(CH₃)C(=O)-O(CH₂CH₂O)₅₋₇-C₈H₁₇, (MeO)₃Si-CH₂CH₂CH₂NHCH₂CH₂NHC(CH₃)₂C(=O)-O(CH₂CH₂O)₅₋₇-C₈H₁₇, (MeO)₃Si-CH₂CH₂CH₂-O(CH₂CH₂O)₅₋₇-C₈H₁₇, (MeO)₃Si-CH₂-O(CH₂CH₂O)₅₋₇-C-₈H₁₇, (EtO)₃Si-CH₂CH₂CH₂-O(CH₂CH₂O)₄₋₆-C₈H₁₇, (EtO)₃Si-CH₂-O(CH₂CH₂O)₃₋₅-C₁₂H₂₅, (HO)₃Si-CH₂CH₂CH₂-O(CH₂CH₂O)₅₋₇-C₆H₁₇, (HO)₃Si-CH₂-O(CH₂CH₂O)₅₋₇-C₈H₁₇, (EtO)₃Si-CH₂CH₂CH₂NHCH₂CH(OH)CH₂-O(CH₂CH₂O)₂₋₆-iso-C₁₃H₂₇, (EtO)₃Si-CH₂CH₂CH₂NHCH(CH₂OH)CH₂-O(CH₂CH₂O)₂₋₆-iso-C₁₃H₂₇, (MeO)₂HOSi-CH₂CH₂CH₂NHCH₂CH₂NHCH₂CH(OH)CH₂-O(CH₂CH₂O)₂₋₆-(CH₂)₈CH=CH(CH₂)₅₋₇CH₃ und (HO)₃Si-CH₂CH₂CH₂NHCH₂CH₂NHCH(CH₂OH)CH₂-O(CH₂CH₂O)₂₋₆-(CH₂)₈CH=CH(CH₂)₅-₇CH₃, wobei Me für Methylrest und Et für Ethylrest steht.

Bevorzugt handelt es sich bei den erfindungsgemäß eingesetzten Verbindungen der Formel (I) um (MeO) ₃Si-CH₂CH₂CH₂OCH₂CH(OH)CH₂OC(=O)CH₂-O(CH₂CH₂O)₂₋₁₅-C₈H₁₇, (EtO)₃Si-CH₂CH₂CH₂OCH₂CH(OH)CH₂OC(=O)CH₂-O(CH₂CH₂O)₂₋₁₅-C₈H₁₇, (MeO)₃Si-CH₂CH₂CH₂OCH₂CH(OH)CH₂OC(=O)CH₂-O(CH₂CH₂O)₂₋₁₅-(CH₂)₁₁₋₁₃CH₃, (EtO)₃Si-CH₂CH₂CH₂OCH₂CH(OH)CH₂OC(=O)CH₂-O(CH₂CH₂O)₂₋₁₅-(CH₂)₁₁₋₁₃CH₃, (MeO)₃Si-CH₂CH₂CH₂OCH₂CH(OH)CH₂OC(=O)CH₂-O(CH₂CH₂O)₂₋₁₅-iso-C₁₃H₂₇, (EtO)₃Si-CH₂CH₂CH₂OCH₂CH(OH)CH₂OC(=O)CH₂-O(CH₂CH₂O)₂₋₁₅-iso-C₁₃H₂₇, (MeO)₃Si-CH₂CH₂CH₂OCH₂CH(OH)CH₂OC(=O)CH₂-O(CH₂CH₂O)₂₋₁₅-(CH₂)₈CH=CH(CH₂)₅₋₇CH₃, (EtO)₃Si-CH₂CH₂CH₂OCH₂CH(OH)CH₂OC(=O)CH₂-O(CH₂CH₂O)₂₋₁₅-(CH₂)₈CH=CH(CH₂)₅₋₇CH₃, (MeO)₃Si-CH₂CH₂CH₂OCH₂CH(CH₂OH)OC(=O)CH₂-O(CH₂CH₂O)₂₋₁₅-C₈H₁₇, (EtO)₃Si-CH₂CH₂CH₂OCH₂CH(CH₂OH)OC(=O)CH₂-O(CH₂CH₂O)₂₋₁₅-C₈H₁₇, (MeO)₃Si-CH₂CH₂CH₂OCH₂CH(CH₂OH)OC(=O)CH₂-O(CH₂CH₂O)₂₋₁₅-(CH₂)₁₁₋₁₃CH₃, (EtO)₃Si-CH₂CH₂CH₂OCH₂CH(CH₂OH)OC(=O)CH₂-O(CH₂CH₂O)₂₋₁₅-(CH₂)₁₁₋₁₃CH₃, (MeO)₃Si-CH₂CH₂CH₂OCH₂CH(CH₂OH)OC(=O)CH₂-O(CH₂CH₂O)₂₋₁₅-iso-C₁₃H₂₇, (EtO)₃Si-CH₂CH₂CH₂OCH₂CH(CH₂(OH))OC(=O)CH₂-O(CH₂CH₂O)₂₋₁₅-iso-C₁₃H₂₇, (MeO)₃Si-CH₂CH₂CH₂OCH₂CH(CH₂OH)OC(=O)CH₂-O(CH₂CH₂O)₂₋₁₅-(CH₂)₈CH=CH(CH₂)₅₋₇CH₃, (EtO)₃Si-CH₂CH₂CH₂OCH₂CH(CH₂OH)OC(=O)CH₂-O(CH₂CH₂O)₂₋₁₅-(CH₂)₈CH=CH(CH₂)₅₋₇CH₃, (MeO)₃SiCH₂CH₂CH₂NC(=O)-O(CH₂CH₂O)₂₋₁₅-C₈H₁₇, (EtO)₂MeSiCH₂NC(=O)-O(CH₂CH₂O)₂₋₁₅-C₈H₁₇, (MeO)₃SiCH₂CH₂CH₂NC(=O)-O(CH₂CH₂O)₂₋₁₅-C₁₂H₂₅, (EtO)₂MeSiCH₂NC(=O)-O(CH₂CH₂O)₂₋₁₅-C₁₂H₂₅, (MeO)₃SiCH₂CH₂CH₂NC(=O)-O(CH₂CH₂O)₂₋₁₅-iso-C₁₃H₂₇, (EtO)₂MeSiCH₂NC(=O)-O(CH₂CH₂O)₂₋₁₅-so-C₁₃H₂₇, (MeO)₃Si-CH₂CH₂CH₂NHC(=O)NHCH(CH₃)CH₂-O(CH₂CH₂O)₂₋₁₅-(CH₂)₇CH3, (EtO)₂MeSi-CH₂NHC(=O)NHCH(CH₃)CH₂-O(CH₂CH₂O)₂₋₁₅-(CH₂)₇CH₃, (MeO)₃Si-CH₂CH₂CH₂NHC(=O)NHCH(CH₃)CH₂-O(CH₂CH₂O)₂-₁₅-(CH₂)₁₁₋₁₃CH₃, (EtO)₂MeSi-CH₂NHC(=O)NHCH(CH₃)CH₂-O(CH₂CH₂O)₂₋₁₅-(CH₂)₁₁₋₁₃CH₃, 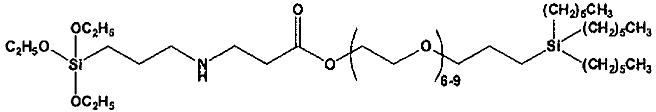 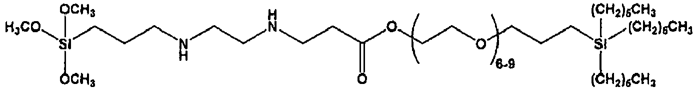 (MeO)₃Si-CH₂CH₂CH₂NHCH₂CH₂C(=O)-O(CH₂CH₂O)₂₋₁₅-C₈H₁₇, (MeO)₃Si-CH₂CH₂CH₂NHCH₂CH₂C(=O)-O(CH₂CH₂O)₂₋₁₅-C₁₂H₂₅, (MeO)₃Si-CH₂CH₂CH₂NHCH₂CH₂C(=O)-O(CH₂CH₂O)₂₋₁₅-iso-C₁₃H₂₇, (MeO)₃Si-CH₂CH₂CH₂NHCH₂CH(CH₃)C(=O)-O(CH₂CH₂O)₂₋₁₅-C₈H₁₇, (MeO)₃Si-CH₂CH₂CH₂NHCH₂CH(CH₃)C(=O)-O(CH_{C}H₂O)₂₋₁₅-C₁₂H₂₅, (MeO)₃Si-CH₂CH₂CH₂NHCH(CH₃)C(=O)-O(CH₂CH_{2O}=)₂₋₁₅-iso-C₁₃H₂₇, (MeO)₃Si-CH₂CH₂CH₂NHCH₂CH₂NHCH₂CH₂C(=O)-O(CH₂CH₂O)₂₋₁₅-C₈H₁₇, (MeO)₃Si-CH₂CH₂CH₂NHCH₂CH₂NHCH₂CH₂C(=O)-O(CH₂CH₂O)₂₋₁₅-C₁₂H₂₅, (MeO)₃Si-CH₂CH₂CH₂NHCH₂CH₂NHCH₂CH₂C(=O)-O(CH₂CH₂O)₂₋₁₅-iso-C₁₃H₂₇, (MeO)₃Si-CH₂CH₂CH₂-O(CH₂CH₂O)₂₋₁₅-C₈H₁₇, (MeO)₃Si-CH₂CH₂CH₂-O(CH₂CH₂O)₂₋₁₅-C₁₂H₂₅, (MeO)₃Si-CH₂CH₂CH₂-O(CH₂CH₂O)₂₋₁₅-iso-C₁₃H₂₇, (EtO)₂MeSi-CH₂-O(CH₂CH₂O)₂₋₁₅-C₈H₁₇, (EtO)₂MeSi-CH₂-O(CH₂CH₂O)₂₋₁₅-C₁₂H₂₅, (EtO)₂MeSi-CH₂-O(CH₂CH₂O)₂₋₁₅-iso-C₁₃H₂₇, (MeO)₃Si-CH₂CH₂CH₂NHCH₂CH(OH)CH₂-O(CH₂CH₂O)₂₋₁₅-C₈H₁₇, (MeO)₃Si-CH₂CH₂CH₂NHCH((CH₂OH)CH₂-O(CH₂CH₂O)₂₋₁₅-C₈H₁₇, (MeO)₃SiCH₂CH₂CH₂NHCH₂CH(OH)CH₂-O(CH₂CH₂O)₂₋₁₅-C₁₂H₂₅, (MeO)₃Si-CH₂CH₂CH₂NHCH(CH₂OH)CH₂-O(CH₂CH₂O)₂₋₁₅-C₁₂H₂₅, (MeO)₃Si-CH₂CH₂CH₂NHCH₂CH(OH)CH₂-O(CH₂CH₂O)₂₋₁₅-iso-C₁₃H₂₇ und (MeO)₃Si-CH₂CH₂CH₂NHCH(CH₂OH)CH₂-O(CH₂CH₂O)₂₋₁₅-iso-C₁₃H₂₇, besonders bevorzugt um (MeO)₃Si-CH₂CH₂CH₂OCH₂CH(OH)CH₂OC(=O)CH₂-O(CH₂CH₂O)₂₋₁₀-C₈H₁₇, (EtO)₃Si-CH₂CH₂CH₂OCH₂CH(OH)CH₂OC(=O)CH₂-O(CH₂CH₂O)₂₋₁₀-C₈H₁₇, (MeO)₃Si-CH₂CH₂CH₂OCH₂CH(OH)CH₂OC(=O)CH₂-O(CH₂CH₂O)₂₋₁₀-(CH₂)₁₁₋₁₃CH₃, (EtO)₃Si-CH₂CH₂CH₂OCH₂CH(OH)CH₂OC(=O)CH₂-O(CH₂CH₂O)₂₋₁₀-(CH₂)₁₁₋₁₃CH₃, (MeO)₃Si-CH₂CH₂CH₂OCH₂CH(CH₂OH)OC(=O)CH₂-O(CH₂CH₂O)₂₋₁₀-C₈H₁₇, (EtO)₃Si-CH₂CH₂CH₂OCH₂CH(CH₂OH)OC(=O)CH₂-O(CH₂CH₂O)₂₋₁₀-C₈H₁₇, (MeO)₃Si-CH₂CH₂CH₂OCH₂CH(CH₂OH)OC(=O)CH₂-O(CH₂CH₂O)₂₋₁₀-(CH₂)₁₁₋₁₃CH₃. (EtO)₃Si-CH₂CH₂CH₂OCH₂CH(CH₂OH)OC(=O)CH₂-O(CH₂CH₂O)₂₋₁₀-(CH₂)₁₁₋₁₃CH₃, (MeO)₃SiCH₂CH₂CH₂NC(=O)-O(CH₂CH₂O)₂₋₁₀-C₈H₁₇, (EtO)₂MeSiCH₂NC(=O)-O(CH₂CH₂O)₂₋₁₀-C₈H₁₇, (MeO)₃SiCH₂CH₂CH₂NC(=O)-O(CH₂CH₂O)₂₋₁₀-C₁₂H₂₅, (EtO)₂MeSiCH₂NC(=O)-O(CH₂CH₂O)₂₋₁₀-C₁₂H₂₅, (MeO)₃Si-CH₂CH₂CH₂NHCH₂CH₂C(=O)-O(CH₂CH₂O) ₂₋₁₀-C₈H₁₇, (MeO)₃Si-CH₂CH₂CH₂NHCH₂CH₂C(=O)-O(CH₂CH₂O)₂₋₁₀-C₁₂H₂₅, (MeO)₃Si-CH₂CH₂CH₂NHCH₂CH(CH₃)C(=O)-O(CH₂CH₂O)₂₋₁₀-C₈H₁₇, (MeO)₃Si-CH₂CH₂CH₂NHCH₂CH(CH₃)C(=O)-O(CH₂CH₂O)₂₋₁₀-C₁₂H₂₅, (MeO)₃Si-CH₂CH₂CH₂NHCH₂CH₂NHCH₂CH₂C(=O)-O(CH₂CH₂O) ₂₋₁₀-C₈H₁₇, (MeO)₃Si-CH₂CH₂CH₂NHCH₂CH₂NHCH₂CH₂C(=O)-O(CH₂CH₂O)₂₋₁₀-C₁₂H₂₅, (MeO)₃Si-CH₂CH₂CH₂-O(CH₂CH₂O)₂₋₁₀-C₈H₁₇, (MeO)₃Si-CH₂CH₂CH₂-O(CH₂CH₂O)₂₋₁₀-C₁₂H₂₅, (EtO)₂MeSi-CH₂-O(CH₂CH₂O)₂₋₁₀-C₈H₁₇, (EtO)₂MeSi-CH₂-O(CH₂CH₂O)₂₋₁₀-C₁₂H₂₅, (MeO)₃Si-CH₂CH₂CH₂NHCH₂CH(OH)CH₂-O(CH₂CH₂O)₂₋₁₀-C₈H₁₇, (MeO)₃Si-CH₂CH₂CH₂NHCH(CH₂OH)CH₂-O(CH₂CH₂O)₂₋₁₀-C₈H₁₇, (MeO)₃Si-CH₂CH₂CH₂NHCH₂CH(OH)CH₂-O(CH₂CH₂O)₂₋₁₀-C₁₂H₂₅ und (MeO)₃Si-CH₂CH₂CH₂NHCH(CH₂OH)CH₂-O(CH₂CH₂O)₂₋₁₀-C₁₂H₂₅, wobei Me für Methylrest und Et für Ethylrest steht.

Die erfindungsgemäß eingesetzten Verbindungen der Formel (I) sind bei Raumtemperatur und 1013 hPa bevorzugt wasserklare bis leicht trübe, farblose bis gelbliche Flüssigkeiten.

Die erfindungsgemäß eingesetzten Verbindungen der Formel (I) sind handelsübliche Produkte bzw. können nach in der Chemie üblichen Methoden hergestellt werden.

Beispielsweise kann der siloxysubstituierte Polyether durch Addition von epoxyfunktionellen Silanen an handelsübliche entwässerte Alkyl(polyethylenglykol)ethercarboxylate, katalysiert mit tertiäten Aminen, wie dem 1,4-Diazabicyclo[2.2.2]octan, hergestellt werden.

Ein weiteres Verfahren zur Herstellung von Verbindungen der Formel (I) besteht in der Addition von handelsüblichen entwässerten Alkyl-polyetherglykolen an isocyanatofunktionelle Silane, wie z.B. 3-Isocyanatopropyl-trimethoxysilan oder (Isocyanatomethyl)methyldiethoxysilan, katalysiert mit Wismutoctanoat oder Dioctylzinndilaurat.

In einem weiteren Verfahren wird zunächst ein aminsubstituierter Polyether durch Addition von Propenimin an handelsübliche einseitig alkylterminierte Polyethylenglycole hergestellt. Das so hergestellte einseitig durch 2-Aminopropylethergruppen terminierte Polyethylenglycol wird anschließend mit Isocyanato-, Glycidoxy-, Acrylato- oder Methacrylato-funktionellen Silanen, wie 3-Isocyanatopropyl-trimethoxysilan, (Isocyanatomethyl)-methyldiethoxysilan, (3-Glycidoxypropyl)trimethoxysilan, (3-Glycidoxypropyl)triethoxysilan, (3-Acryloxypropyl)trimethoxysilan, (Acryloxymethyl)triethoxysilan, 3-(Methacryloxypropyl)-trimethoxysilan oder (Methacryloxymethyl)triethoxysilan, umgesetzt.

In einem weiteren Verfahren wird zunächst der silylsubstituierte Polyether durch Addition von Trialkylsilanen an handelsübliche einseitig allylterminierte Polyethylenglycole, katalysiert mit Tris(triphenylphosphin)rhodium(I)chlorid, hergestellt. Das so hergestellte einseitig durch 3-Trialkylsilylpropylgruppen terminierte Polyethylenglycol wird anschließend mit Acrylsäurechlorid oder Methacrylsäurechlorid in Anwesenheit eines HCl-Acceptors in einem Lösungsmittel, wie z.B. Triethylamin in Diethylether, umgesetzt. Das so hergestellte Polyethylenglykol ist auf der einen Seite mit 3-Trialkylsilylpropylgruppen terminiert und auf der anderen Seite mit einer Acrylat- oder Methacrylatgruppe terminiert und kann nun an ein Silan mit einer primären Aminogruppe, wie (3-Aminopropyl)trimethoxysilan, (3-Aminopropyl)triethoxysilan, N-(2-Aminoethyl)(3-aminopropyl)triethoxysilan, N-(2-Aminoethyl)(3-aminopropyl)trimethoxysilan, N-(2-Aminoethyl)(3-aminopropyl)methyldimethoxysilan, addiert werden.

In einem weiteren Verfahren werden handelsübliche einseitig alkylterminierte Polyethylenglycole mit Acrylsäurechlorid oder Methacrylsäurechlorid in Anwesenheit eines HCl-Acceptors in einem Lösungsmittel, wie z.B. Triethylamin in Diethylether, umgesetzt. Das so hergestellte Polyethylenglykol ist auf der einen Seite mit Alkylgruppen terminiert und auf der anderen Seite mit einer Acrylat- oder Methacrylatgruppe terminiert und kann nun an ein Silan mit einer primären Aminogruppe, wie (3-Aminopropyl)trimethoxysilan, (3-Aminopropyl)triethoxysilan, N-(2-Aminoethyl)(3-aminopropyl)triethoxysilan, N-(2-Aminoethyl)(3-aminopropyl)trimethoxysilan, N-(2-Aminoethyl)(3-aminopropyl)methyl-dimethoxysilan, addiert werden.

In einem weiteren Verfahren werden zunächst aus handelsüblichen einseitig alkylterminierten Polyethylenglycolen die entsprechenden Alkoholate hergestellt, z.B. durch Umsetzung mit Butyllithium oder Natriumethylat. Das so hergestellte Alkyl-polyethylenglykolat wird anschließend mit Chloralkylsilanen, wie (3-Chlorpropyl)trimethoxysilan, (3-Chlorpropyl)triethoxysilan, (Chlormethyl)methyldimethoxysilan oder (Chlormethyl)triethoxysilan), umgesetzt und vom entstandenen Chlorid gereinigt.

In einem weiteren Verfahren werden an handelsüblichen einseitig alkylterminierten Polyethylenglycol-allylether oder -vinylether Trialkoxysilane, katalysiert mit Tris(triphenylphosphin)rhodium(I)chlorid, addiert.

In einem weiteren Verfahren werden handelsübliche einseitig alkylterminierte Polyethylenglycole-allylether oder -vinylether epoxidiert, z.B. mit Peressigsäure. Das so hergestellte Polyethylenglykol ist auf der einen Seite mit Alkylgruppen terminiert und trägt auf der anderen Seite Epoxygruppe und kann nun an ein Silan mit einer primären oder sekundären Aminogruppe, wie (3-Aminopropyl)trimethoxysilan, (3-Aminopropyl)triethoxysilan, N-(2-Aminoethyl)(3-aminopropyl)triethoxysilan, N-(2-Aminoethyl)(3-aminopropyl)trimethoxysilan, N-(2-Aminoethyl)(3-aminopropyl)methyldimethoxysilan oder (N-(n-Butyl)-3-aminopropyl)-trimethoxysilan, addiert werden.

Bei den erfindungsgemäßen Massen kann es sich um beliebige, bisher bekannte Typen von durch Kondensationsreaktion vernetzbare Massen handeln, die bei Abwesenheit von Wasser lagerstabil und zu Elastomeren oder Harzen vernetzbar sind (sog. RTV-Massen). Die vernetzbaren Massen können dabei frei von Füllstoffen sein, können aber auch aktive oder nicht aktive Füllstoffe enthalten.

Art und Menge der üblicherweise in solchen Massen verwendeten Komponenten sind bereits bekannt.

Im Rahmen der vorliegenden Erfindung soll die Bezeichnung "Kondensationsreaktion" auch einen gegebenenfalls vorangehenden Hydrolyseschritt mitumfassen.

Bevorzugt handelt es sich bei den erfindungsgemäßen durch Kondensationsreaktion vernetzbaren Massen um solche herstellbar unter Verwendung von
(A) Organosiliciumverbindungen mit mindestens zwei kondensationsfähigen Gruppen und
(B) Verbindungen der Formel (I).

Im Rahmen der vorliegenden Erfindung sollen unter der Bezeichnung "kondensationsfähige Reste" auch solche Reste verstanden werden, die einen gegebenenfalls vorangehenden Hydrolyseschritt miteinschließen.

Bei den kondensationsfähigen Gruppen, welche die eingesetzten, an der Vernetzungsreaktion beteiligten Organosiliciumverbindungen aufweisen, kann es sich um beliebige Gruppen handeln, wie bevorzugt Hydroxy-, Oximato- und Organyloxygruppen, besonders bevorzugt um Hydroxy- und Organyloxygruppen, insbesondere Hydroxygruppen.

Bei den erfindungsgemäß eingesetzten Organosiliciumverbindungen (A) kann es sich um alle Organosiliciumverbindungen mit mindestens zwei kondensationsfähigen Gruppen handeln, die auch bisher in durch Kondensationsreaktion vernetzbaren Massen eingesetzt worden sind. Es kann sich dabei sowohl um reine Siloxane, also ≡Si-O-Si≡ -Strukturen, als auch um Silcarbane, also ≡Si-R"-Si≡ -Strukturen mit R" gleich einem zweiwertigen, gegebenenfalls substituierten oder mit Heteroatomen unterbrochenen Kohlenwasserstoffrest oder beliebigen Organosiliciumgruppen aufweisende Copolymere handeln.

Bevorzugt handelt es sich bei den erfindungsgemäß eingesetzten Organosiliciumverbindungen (A) um solche enthaltend Einheiten der Formel

R³_{c}(OR⁴)_{b}SiO_{(4-b-c)/2} (II),

wobei
R³ gleich oder verschieden sein kann und gegebenenfalls substituierte Kohlenwasserstoffreste, die durch Sauerstoffatome unterbrochen sein können, bedeutet,
R⁴ gleich oder verschieden sein kann und Wasserstoffatom oder einwertige, gegebenenfalls substituierte Kohlenwasserstoffreste, die durch Sauerstoffatome unterbrochen sein können, bedeutet,
b 0, 1, 2 oder 3, bevorzugt 0, 1 oder 2, besonders bevorzugt 0, ist und
c 0, 1, 2 oder 3, bevorzugt 1 oder 2, ist,
mit der Maßgabe, dass die Summe aus b+c kleiner oder gleich 3 ist und pro Molekül mindestens zwei kondensationsfähige Reste (OR⁴) anwesend sind.

Bevorzugt handelt es sich bei Rest R³ um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen-und/oder Oxypropyleneinheiten aufgebaut sind, besonders bevorzugt um Alkylreste mit 1 bis 12 Kohlenstoffatomen, insbesondere um den Methylrest. Es kann sich bei Rest R³ aber auch um zweiwertige Reste handeln, die z.B. zwei Silylgruppen miteinander verbinden.

Beispiele für Reste R³ sind die oben für Reste R angegebenen Beispiele sowie Alkoxyalkylreste, wie der Methoxyethyl-, der Ethoxyethyl- oder der Ethoxyethoxyethylrest; gamma-substituierte Propylreste, wie der Aminopropyl-, der N-(2-Aminoethyl)-3-aminopropyl-, der Glycidoxypropyl- oder der Methacryloxypropylrest; substituierte Methylreste, wie der N-Cyclohexylaminomethyl-, der N-Phenylaminomethyl-, der N,N'-Dibutylaminomethyl-, der Methacryloxymethyl- oder der N-Carbamatomethylrest.

Beispiele für zweiwertige Reste R³ sind -CH₂CH₂-, -CH₂CH₂CH₂-, -CH₂CH₂CH₂CH₂CH₂CH₂CH₂CH₂-, -CH₂CH(CH₂CH₂CH₂CH₂CH₂CH₂CH₂CH₃)-, -CH₂CH₂-Ph-CH₂CH₂-, -CH₂CH₂CH₂-NH-CH₂CH₂CH₂- und -CH₂CH₂CH₂-NH-CH₂CH₂-NH-CH₂CH₂CH₂-, wobei Ph Phenylenrest bedeutet.

Beispiele für Reste R⁴ sind die für R angegebenen einwertigen Reste.

Bevorzugt handelt es sich bei Rest R⁴ um Wasserstoffatom oder Alkylreste mit 1 bis 12 Kohlenstoffatomen, besonders bevorzugt um Wasserstoffatom oder Alkylreste mit 1 bis 6 Kohlenstoffatomen, insbesondere um Wasserstoffatom, Methyl- oder Ethylrest.

Besonders bevorzugt handelt es sich bei erfindungsgemäß eingesetzten Organosiliciumverbindungen (A) um solche der Formel

(OR⁴)_{3-f}R³_{f}Si-(SiR³₂-O)ₑ-SiR³_{f}(OR⁴)_{3-f} (III),

wobei
R³ und R⁴ eine der oben angegebenen Bedeutungen haben,
e gleich 30 bis 3000 ist und
f gleich 1,2 oder 3 ist.

Vorzugsweise ist f gleich 2, wenn R⁴ die Bedeutung von Wasserstoffatom hat, und f gleich 1, wenn R⁴ eine Bedeutung verschieden Wasserstoffatom hat.

Beispiele für Organosiliciumverbindungen (A) sind
(MeO)₂MeSiO[SiMe₂O]₂₀₀₋₂₀₀₀SiMe(OMe)₂,
(HO)Me₂SiO[SiMe₂O]₂₀₀₋₂₀₀₀SiMe₂(OH),
(EtO)₂MeSiO[SiMe₂O]₂₀₀₋₂₀₀₀SiMe(OEt)₂,
(HO)MeViSiO[SiMe₂O]₂₀₀₋₂₀₀₀SiMeVi(OH),
(MeO)₂ViSiO[SiMe₂O]₂₀₀₋₂₀₀₀SiVi(OMe)₂ und
(EtO)₂ViSiO[SiMe₂O]₂₀₀₋₂₀₀₀SiVi(OEt)₂,
wobei Me Methylrest, Et Ethylrest und Vi Vinylrest bedeutet.

Die erfindungsgemäß eingesetzten Organosiliciumverbindungen (A) haben eine Viskosität von bevorzugt 100 bis 10⁶ mPas, besonders bevorzugt von 10³ bis 350 000 mPas, jeweils bei 25°C.

Bei den Organosiliciumverbindungen (A) handelt es sich um handelsübliche Produkte bzw. können nach in der Siliciumchemie gängigen Methoden hergestellt werden.

Die erfindungsgemäßen Massen enthalten Komponente (B) in Mengen von bevorzugt 0,1 bis 50 Gewichtsteilen, besonders bevorzugt 0,2 bis 10 Gewichtsteilen, insbesondere 0,3 bis 3 Gewichtsteilen, jeweils bezogen auf 100 Gewichtsteile Komponente (A). Zusätzlich zu den oben beschriebenen Komponenten (A) und (B) können die erfindungsgemäßen Massen nun alle weiteren Stoffe enthalten, die auch bisher in durch Kondensationsreaktion vernetzbaren Massen eingesetzt worden sind, wie z.B. Vernetzer (C), Härtungsbeschleuniger (D), Weichmacher (E), Füllstoffe (F), Haftvermittler (G) und Additive (H), die jeweils verschieden sind zu Komponenten (A) und (B).

Bei den in den erfindungsgemäßen Massen gegebenenfalls eingesetzten Vernetzern (C) kann es sich um beliebige, bisher bekannte Vernetzer mit mindestens drei hydrolysefähigen Resten handeln, wie beispielsweise Silane oder Siloxane mit mindestens drei Organyloxygruppen.

Bei den in den erfindungsgemäßen Massen gegebenenfalls eingesetzten Vernetzern (C) handelt es sich vorzugsweise um Organosiliciumverbindungen der Formel

Z_{d}SiR⁵_{(4-d)} (IV),

wobei
R⁵ gleich oder verschieden sein kann und einwertige, gegebenenfalls substituierte Kohlenwasserstoffreste, die durch Sauerstoffatome unterbrochen sein können, bedeutet,
Z gleich oder verschieden sein kann und einen hydrolysierbaren Rest bedeutet und
d 3 oder 4 ist,
sowie deren Teilhydrolysate.

Bei den Teilhydrolysaten kann es sich dabei um Teilhomohydrolysate handeln, d.h. Teilhydrolysate von einer Art von Organosiliciumverbindung der Formel (IV), wie auch um Teilcohydrolysate, d.h. Teilhydrolysate von mindestens zwei verschiedenen Arten von Organosiliciumverbindungen der Formel (IV).

Obwohl in Formel (IV) nicht angegeben, können die erfindungsgemäß gegebenenfalls eingesetzten Organosiliciumverbindungen herstellungsbedingt einen geringen Anteil von Hydroxylgruppen, bevorzugt bis maximal 5 % aller Si-gebundenen Reste, aufweisen.

Handelt es sich bei den in den erfindungsgemäßen Massen gegebenenfalls eingesetzten Vernetzern (C) um Teilhydrolysate von Organosiliciumverbindungen der Formel (IV), so sind solche mit bis zu 10 Siliciumatomen bevorzugt.

Bevorzugt handelt es sich bei Rest Z um Rest -OR⁶, wobei R⁶ gegebenenfalls substituierte Kohlenwasserstoffreste, die durch Sauerstoffatome unterbrochen sein können, bedeutet.

Beispiele für Z sind Alkoxyreste, wie Methoxy-, Ethoxy-, n-Propoxy-, i-Propoxy-, n-Butoxy-, i-Butoxy-, s-Butoxy-, tert-Butoxy- und 2-Methoxyethoxyrest, Acyloxyreste, wie der Acetoxyrest, Aminoreste, wie Methylamino-, Dimethylamino-, Ethylamino-, Diethylamino- und Cyclohexylaminorest, Amidoreste, wie N-Methylacetamido- und Benzamidorest, Aminoxyreste, wie der Diethylaminoxyrest, Oximoreste, wie Methylethylketoximo-, Acetonoximo- und Methylisobutylketoximorest, und Enoxyreste, wie der 2-Propenoxyrest.

Beispiele für Reste R⁶ sind die für R angegebenen einwertigen Reste.

Bevorzugt handelt es sich bei Rest R⁶ um Alkylreste mit 1 bis 12 Kohlenstoffatomen, besonders bevorzugt um den Methyl- oder Ethylrest.

Beispiele für Rest R⁵ sind die oben für Rest R genannten einwertigen Beispiele, wobei Kohlenwasserstoffreste mit 1 bis 12 Kohlenstoffatomen bevorzugt und der Methyl-, der Ethyl-, der Phenyl- und der Vinylrest besonders bevorzugt sind.

Bevorzugt handelt es sich bei den in den erfindungsgemäßen Massen gegebenenfalls eingesetzten Vernetzern (C) um Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, N-(Trimethoxysilylmethyl)-O-methylcarbamat, (N-Cyclohexylaminomethyl)triethoxysilan, (N-Morpholinomethyl)triethoxysilan, 1,2-Bis(trimethoxysilyl)ethan, 1,2-Bis(triethoxysilyl)ethan, Methyltris(methylethylketoximo)silan, Vinyltris-(methylethylketoximo)silan, Vinyltris(acetonoximo)silan, Vinylbis(acetonoximo)methoxysilan, Tetrakis-(methylethylketoximo)-silan, Methyltriacetoxysilan, Ethyltriacetoxysilan, Vinyltriacetoxysilan, Di(tert.-butoxy)diacetoxysilan, N,N',N"-Tricyclohexyl-1-methylsilantriamin, 1-Methyl-N,N',N"-tris(1-methylpropyl)silantriamin, sowie Teilhydrolysate der genannten Organosiliciumverbindungen, wie z.B. Hexaethoxydisiloxan.

Besonders bevorzugt handelt es sich bei den in den erfindungsgemäßen Massen gegebenenfalls eingesetzten Vernetzern (C) um Tetramethoxysilan, Tetraethoxysilan, Tetrapropoxysilan, Methyltrimethoxysilan, Methyltriethoxysilan, Vinyltrimethoxysilan, Vinyltriethoxysilan, Phenyltrimethoxysilan, 1,2-Bis(trimethoxysilyl)ethan, 1,2-Bis(triethoxysilyl)ethan, Methyltris(methylethylketoximo)silan, Vinyltris(methylethylketoximo)silan, Methyltriacetoxysilan, Ethyltriacetoxysilan, Vinyltriacetoxysilan sowie deren Teilhydrolysate, insbesondere um Methyltrimethoxysilan, Vinyltriethoxysilan, Methyltris(methylethylketoximo)silan, Vinyltris(methylethylketoximo)silan, Methyltriacetoxysilan, Ethyltriacetoxysilan, Vinyltriacetoxysilan sowie deren Teilhydrolysate.

Die in den erfindungsgemäßen Massen gegebenenfalls eingesetzten Vernetzer (C) sind handelsübliche Produkte bzw. können nach in der Siliciumchemie bekannten Verfahren hergestellt werden.

Falls die erfindungsgemäßen Massen Vernetzer (C) enthalten, handelt es sich um Mengen von vorzugsweise 0,01 bis 20 Gewichtsteilen, besonders bevorzugt 0,5 bis 10 Gewichtsteilen, insbesondere 2 bis 6 Gewichtsteilen, jeweils bezogen auf 100 Gewichtsteile Organosiliciumverbindung (A). Die erfindungsgemäßen Massen enthalten bevorzugt Vernetzer (C).

Als Härtungsbeschleuniger (D) können alle Härtungsbeschleuniger, die auch bisher in durch Kondensationsreaktion vernetzbare Massen eingesetzt werden, verwendet werden. Beispiele für Härtungsbeschleuniger (D) sind Titanverbindungen und organische Zinnverbindungen, wie Di-n-butylzinndilaurat und Di-n-butylzinndiacetat, Di-n-butylzinnoxid, Dimethylzinndiacetat, Dimethylzinndilaurat, Dimethylzinndineodecanoat, Dimethylzinnoxid, Dioctylzinndiacetat, Dioctylzinndilaurat, Dioctylzinnoxid sowie Umsetzungsprodukte dieser Verbindungen mit Alkoxysilanen, wie Tetraethoxysilan, wobei Di-n-butylzinndiacetat, Dioctylzinndilaurat und Dioctylzinnoxid in einer Mischung aus 1 Gew.-Teil Methyltriethoxysilan-Hydrolysat-Oligomeren mit durchschnittlich 10 Si-Atomen pro Molekül und 1 Gew.-Teil 3-Aminopropyltriethoxysilan bevorzugt sind und Dioctylzinnoxid in einer Mischung aus 1 Gew.-Teil Methyltriethoxysilan-Hydrolysat-Oligomeren mit durchschnittlich 10 Si-Atomen pro Molekül und 1 Gew.-Teil 3-Aminopropyltriethoxysilan besonders bevorzugt ist.

Falls die erfindungsgemäßen Massen Härtungsbeschleuniger (D) enthalten, handelt es sich um Mengen von vorzugsweise 0,01 bis 3 Gewichtsteilen, bevorzugt 0,05 bis 2 Gewichtteilen, jeweils bezogen auf 100 Gewichtsteile Bestandteil (A). Die erfindungsgemäßen Massen enthalten bevorzugt Härtungsbeschleuniger (D).

Beispiele für Weichmacher (E) sind bei Raumtemperatur flüssige, durch Trimethylsiloxygruppen endblockierte Dimethylpolysiloxane, insbesondere mit Viskositäten bei 25°C im Bereich zwischen 10 und 1000 mPas, bei Raumtemperatur und Umgebungsdruck flüssige Organopolysiloxane, die im Wesentlichen aus -SiO_{3/2}- und ≡SiO_{1/2}-Einheiten, sogenannte T- und M-Einheiten, bestehen, sowie hochsiedende Kohlenwasserstoffe, wie z.B. Paraffinöle oder Mineralöle bestehend im Wesentlichen aus naphthenischen und paraffinischen Einheiten.

Bevorzugt handelt es sich bei Weichmacher (E) um durch Trimethylsiloxygruppen endblockierte Dimethylpolysiloxane, mit Viskositäten bei 25°C im Bereich zwischen 100 und 1000 mPas, und um hochsiedende Kohlenwasserstoffe.

Falls die erfindungsgemäßen Massen Weichmacher (E) enthalten, handelt es sich um Mengen von vorzugsweise 1 bis 300 Gewichtsteilen, besonders bevorzugt 5 bis 200 Gewichtsteilen, insbesondere 10 bis 100 Gewichtsteilen, jeweils bezogen auf 100 Gewichtsteile Organosiliciumverbindung (A). Die erfindungsgemäßen Massen enthalten bevorzugt Weichmacher (E).

Beispiele für Füllstoffe (F) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Falls Füllstoffe (F) eingesetzt werden, handelt es sich bevorzugt um hydrophile pyrogene Kieselsäure und gefälltes oder gemahlenes Calciumcarbonat.

Falls die erfindungsgemäßen Massen Füllstoffe (F) enthalten, handelt es sich um Mengen von vorzugsweise 1 bis 300 Gewichtsteilen, besonders bevorzugt 5 bis 200 Gewichtsteilen, insbesondere 10 bis 200 Gewichtsteilen, jeweils bezogen auf 100 Gewichtsteile Organosiliciumverbindung (A). Die erfindungsgemäßen Massen enthalten bevorzugt Füllstoffe (F).

Beispiele für die in den erfindungsgemäßen Massen eingesetzten Haftvermittler (G) sind Silane und Organopolysiloxane mit funktionellen Gruppen, wie beispielsweise solche mit Glycidoxypropyl-, Aminopropyl- oder Methacryloxypropylresten. Falls jedoch bereits eine andere Komponente, wie etwa Organosiliciumverbindungen (A), (B) oder (C) die genannten funktionellen Gruppen aufweist, kann auf einen Zusatz von Haftvermittler verzichtet werden.

Falls die erfindungsgemäßen Massen Haftvermittler (G) enthalten, handelt es sich um Mengen von vorzugsweise 0,1 bis 50 Gewichtsteilen, besonders bevorzugt 0,5 bis 20 Gewichtsteilen, insbesondere 1 bis 10 Gewichtsteilen, jeweils bezogen auf 100 Gewichtsteile Organosiliciumverbindung (A).

Beispiele für Additive (H) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel, Fungizide, Mittel zur Verlängerung der Hautbildungszeit, wie Silane mit einem SiCgebundenen Mercaptoalkylrest, zellenerzeugende Mittel, z.B. Azodicarbonamid, Hitzestabilisatoren, Scavenger, wie Si-N enthaltende Silazane oder Silylamide, Cokatalysatoren, wie Lewis-und Brönstedsäuren, z.B. Sulfonsäuren, Phosphorsäuren, Phoshorsäureester, Phosphonsäuren und Phosphonsäureester, Thixotropiermittel, wie beispielsweise Phosphorsäureester oder einseitig oder beidseitig OH-endteminiertes Polyethylenglykol, organischen Lösungsmittel, wie Alkylaromaten, sowie beliebige Siloxane, die unterschiedlich zu Komponenten (A), (B) und (C) sind.

Falls die erfindungsgemäßen Massen Additive (H) enthalten, handelt es sich um Mengen von vorzugsweise 0,01 bis 100 Gewichtsteile, besonders bevorzugt 0,1 bis 30 Gewichtsteilen, insbesondere 0,3 bis 10 Gewichtsteilen, jeweils bezogen auf 100 Gewichtsteile Organosiliciumverbindung (A). Die erfindungsgemäßen Massen enthalten bevorzugt Additive (H).

Besonders bevorzugt handelt es sich bei den erfindungsgemäßen Massen um solche, die
(A) Organosiliciumverbindungen enthaltend Einheiten der Formel (II),
(B) Verbindung der Formel (I),
(C) Vernetzer der Formel (IV),
   gegebenenfalls
(D) Härtungsbeschleuniger,
   gegebenenfalls
(E) Weichmacher,
   gegebenenfalls
(F) Füllstoffe,
   gegebenenfalls
(G) Haftvermittler und
   gegebenenfalls
(H) Additive
   enthalten.

Insbesondere handelt es sich bei den erfindungsgemäßen Massen um solche, die
(A) Organosiliciumverbindungen enthaltend Einheiten der Formel (II),
(B) Verbindung der Formel (I),
(C) Vernetzer der Formel (IV),
(D) Härtungsbeschleuniger,
   gegebenenfalls
(E) Weichmacher,
   gegebenenfalls
(F) Füllstoffe,
   gegebenenfalls
(G) Haftvermittler und
   gegebenenfalls
(H) Additive
   enthalten.

Insbesondere bevorzugt handelt es sich bei den erfindungsgemäßen Massen um solche, die
(A) Organosiliciumverbindungen enthaltend Einheiten der Formel (III),
(B) Verbindung der Formel (I),
(C) Vernetzer der Formel (IV),
(D) Härtungsbeschleuniger,
(E) Weichmacher,
(F) Füllstoffe,
(H) Additive und
   gegebenenfalls
(G) Haftvermittler
   enthalten.

Die erfindungsgemäßen Massen enthalten über die Komponenten (A) bis (H) bevorzugt keine weiteren Bestandteile.

Zur Bereitung der erfindungsgemäßen Massen können alle Bestandteile in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35 bis 135°C. Weiterhin ist es möglich, zeitweilig oder ständig unter vermindertem Druck zu mischen, wie z.B. bei 30 bis 500 hPa Absolutdruck, um flüchtige Verbindungen oder Luft zu entfernen.

Ein weiterer Gegenstand der Erfindung ist ein Verfahren zur Herstellung der erfindungsgemäßen Massen durch Vermischen der einzelnen Bestandteile.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30°C bis 50°C und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Förmkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Harzen oder Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser-und Luftfahrzeugen, oder als Klebstoffe oder Verkittungsmassen, z.B. im Fensterbau oder bei der Herstellung von Vitrinen, sowie z.B. zur Herstellung von Schutzüberzügen, einschließlich solcher für der ständigen Einwirkung von Süß- oder Meerwasser ausgesetzte Oberflächen oder das Gleiten verhindernden Überzügen oder von gummielastischen Formkörpern, zum Beschichten von Oberflächen, wie Baustoffe, z.B. Holz, Beton, Metalle oder Kunststoffe, sowie für die Isolierung von elektrischen oder elektronischen Vorrichtungen.

Die erfindungsgemäßen Massen haben den Vorteil, dass sie leicht herzustellen sind und bereits geringe Mengen von Verbindungen der Formel (I) eine sehr stark hydrophilisierende Wirkung haben. Darüber hinaus bleibt der Effekt auch über längere Zeit erhalten, d.h. er verringert sich nicht dadurch, dass die hydrophilisierende Schicht wieder durch überwandernde Siloxane hydrophob wird.

Des Weiteren haben die erfindungsgemäßen Massen den Vorteil, dass die Oberfläche der erzeugten Formkörper permanente Hydrophilie zeigen und gleichzeitig eine ausgezeichnete Haftung auf Baustoffen, wie Holz, Beton, Metalle oder Kunststoffe aufweisen.

Die erfindungsgemäßen vernetzbaren Massen haben den Vorteil, dass sie sich durch eine sehr hohe Lagerstabilität und eine hohe Vernetzungsgeschwindigkeit auszeichnen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

Zur Beurteilung der Kontaktwinkels der Vulkanisatoberfläche (Test 1) werden die vernetzbaren Massen in jeweils einer 2 mm dicken Schicht auf PE-Folie aufgetragen und nach der Lagerung 7 Tage bei 23°C und 50 % relativer Luftfeuchtigkeit an drei Messpunkten der linke und rechte Kontaktwinkel mit Wassertropfen von ca. 13 µl Volumen nach 5 min bestimmt. Der gemittelte Kontaktwinkel aus allen drei Messungen wird in Grad, auf die nächste ganze Zahl gerundet, angegeben.

Zur Beurteilung des Ablaufwinkels von Wassertropfen auf der Oberfläche (Test 2) werden die vernetzbaren Massen in jeweils einer 2 mm dicken Schicht auf PE-Folie aufgetragen und 7 Tage bei 23°C und 50 % relativer Luftfeuchtigkeit ausgehärtet. Nun wird das Fell in einem Viertelkreis gelegt, so dass der Bereich von waagerecht (= 0°) bis senkrecht (= 90°) mit dem Fell bedeckt ist. Auf einem Winkel größer 50° werden vier Wassertropfen von 6 µl, 10 µl, 15 µl und 20 µl aufgetragen und der Ablaufwinkel nach 5 min, wenn die Tropfen sich nicht mehr bewegen, an der Tropfenvorderkante abgelesen. Die Werte werden mit einer Genauigkeit von +/- 1 Grad ermittelt und notiert.

### Herstellung von Produkt 1

In einem Glaskolben mit Liebigkühler und Vorlage wurden 100 g Glykolsäure-ethoxylat-laurylether (Mn=460 g/mol) (käuflich erhältlich unter der Bezeichnung AKYPO RLM 45 CA bei KAO Chemicals GmbH, D-Emmerich) bei 100°C und 20 mbar gerührt bis sich kein Wasser mehr abscheidet. Nach dem Belüften mit Stickstoff, wurden 47 g (3-Glycidoxypropyl)trimethoxysilan (käuflich erhältlich unter der Marke GENIOSIL^{®} GF 80 bei der Wacker Chemie AG, D-München) und 0,5 g 1,4-Diazabicyclo[2.2.2]octan (käuflich erhältlich als DABCO^{®} bei Sigma-Aldrich Chemie GmbH, D-Taufkirchen) zugegeben und 2 Stunden bei 100°C gerührt. Nach dem Abkühlen und Filtrieren erhält man eine gelbliche Flüssigkeit. Mittels 13C-NMR und Titration konnte ein Additionsgrad von über 80 % festgestellt werden.

Es werden 135 g Produkt erhalten, das hauptsächlich aus folgenden Stoffen besteht:
(MeO)₃Si-CH₂CH₂CH₂OCH₂CH(OH)CH₂OC(=O)CH₂-O(CH₂CH₂O)₂₋₆-(CH₂)₁₁₋₁₃CH₃ und (MeO)₃Si-CH₂CH₂CH₂OCH₂CH(CH₂(OH)OC(=O)CH₂-O(CH₂CH₂O)₂₋₆-(CH₂)₁₁₋₁₃CH₃.

### Herstellung von Produkt 2

In einem Glaskolben mit Liebigkühler und Vorlage wurden 103 g Isotridecanol, ethoxyliert) (käuflich erhältlich unter der Bezeichnung Marlipal 0 13/60 bei Sasol Germany GmbH, D-Hamburg) bei 80°C und 6 mbar gerührt bis sich kein Wasser mehr abscheidet. Nach dem Belüften mit Stickstoff, wurden 47,1 g (3-Isocyanatopropyl)trimethoxysilan (käuflich erhältlich unter der Marke GENIOSIL^{®} GF 40 bei der Wacker Chemie AG, D-München) zugegeben und 30 Minuten gerührt. Anschließend wurde 0,015 g Bismut 2-ethylhexanoat (käuflich erhältlich bei Gelest Inc., D-Frankfurt am Main) zugegeben und 2 Stunden bei 80°C gerührt. Nach dem Abkühlen auf 60°C wurde 0,76 g Methanol zugegeben und 30 Minuten gerührt und das Produkt unter Argon feuchtigkeitsdicht abgefüllt.

Vor der Methanolzugabe betrug der NCO-Gehalt 0,005%, ermittelt mit IR.

Es werden 150 g Produkt erhalten, das im Wesentlichen aus iso-C₁₃H₂₇-O(CH₂CH₂O)₄₋₈-C(=O)-NH-CH₂-CH₂-CH₂-Si(OMe)₃ besteht.

### Herstellung von Produkt 3

Durch eine Mischung aus 9,38 g (24 mmol) α-Allyl-ω-hydroxypoly(ethylenglycol) mit einem Molekulargewicht von ca. 390 g/mol, 2,98 g (25 mmol) Triethylsilan und 0,0448 g Wilkinson-Katalysator (Tris(triphenylphosphin)rhodium(I)chlorid) wurde bei Raumtemperatur 1 Stunde lang trockene Luft geleitet. Anschließend wurde die Mischung bei Raumtemperatur für eine Dauer von 16 Stunden weiter gerührt. Danach wurde eine Lösung bestehend aus 1,0 g Essigsäure, 1 ml dest. Wasser und 50 ml THF zugegeben und weitere 5 Stunden bei Raumtemperatur gerührt. Schließlich wurden 5 g MgO zugegeben, anschließend der Feststoff abfiltriert und das THF unter vermindertem Druck abgezogen. Der Rückstand wurde in Acetonitril gelöst. Diese Lösung wurde mit Hexan extrahiert (3 mal 10 ml) und anschließend das Acetonitril unter vermindertem Druck abdestilliert. Der Rückstand wurde weiter gereinigt, indem er durch eine kurze, mit Silicagel gefüllte Säule, gegeben wurde, wobei eine Mischung aus Methylenchlorid/Hexan (1:1) als Eluent verwendet wurde. Nach Abdampfen der Lösungsmittel wurden 9,1 g (74 %) reines α-Hydroxy-ω-triethylsilylpropylpolyethylenglycol erhalten.

8,0 g (15,9 mmol) des so erhaltenen α-Hydroxy-ω-triethylsilylpropylpolyethylenglycols und 16,2 g (159 mmol) Triethylamin wurden in 200 ml Diethylether gelöst. Zu dieser Lösung wurden innerhalb 30 min 1,6 ml (17,5 mmol) Acrylsäurechlorid bei 0°C unter Rühren zugetropft. Nach beendeter Zugabe wurde die Kühlung entfernt und die Mischung weiter für eine Dauer von 16 Stunden bei Raumtemperatur gerührt. Anschließend wurde vom ausgefallenen Feststoff abgetrennt und die etherische Lösung unter vermindertem Druck vom Lösungsmittel befreit. Der Rückstand wurde wiederum über eine Silicagel-Säule unter Verwendung von Methylenchlorid/Hexan als Eluent gereinigt. Es wurden so 7,63 g (81%) des gewünschten Zielproduktes α-Acryloyl-ω-triethylsilylpropylpoly(ethylenglycol) (APC2) erhalten. Die Gesamtausbeute beider Schritte betrug 60%.

Nach der oben beschriebenen Vorschrift wurde eine größere Menge APC2 (M=550g/mol) hergestellt und 100 g (0,18 mol) davon in einer Glasflasche mit 32 g (3-Aminopropyl)trimethoxysilan gut vermischt. Nach 7 Tagen Lagerung bei Raumtemperatur war keine Doppelbindung mehr nachweisbar im 13C-NMR.

Es werden 132 g eines Gemisches bestehend aus (CH₃CH₂)₃SiCH₂CH₂CH₂O(CH₂CH₂O)₆₋₉-C(=0)CH₂CH₂NHCH₂CH₂CH₂Si(OMe) ₃ und (CH₃CH₂)₃SiCH₂CH₂CH₂O (CH₂CH₂O)₆₋₉-C(=O)CH(CH₃)NHCH₂CH₂CH₂Si(OMe)₃ erhalten.

### Herstellung von Produkt 4

Der zur Herstellung von Produkt 3 beschriebene Versuch wurde wiederholt unter Verwendung von zunächst 9,98 g (28,5 mmol) α-Allyl-ω-hydroxypoly(ethylenglycol) mit einem Molekulargewicht von ca. 390 g/mol und 9,12 g (31,4 mmol) Tri-n-hexylsilan. Es wurden 9,8 g (53,5 %) reines α-Hydroxy-ω-tri-n-hexylsilylpropylpolyethylenglycol erhalten, von dem 8,0 g (11,8 mmol) gemäß der bei der Herstellung von Produkt 3 beschriebenen Verfahrensweise mit Acrylsäurechlorid zu 6,9 g (78%) Zielprodukt α-Acryloyl-ω-tri-n-hexylsilylpropylpoly(ethylenglycol) (APC6) umgesetzt wurden. Die Gesamtausbeute beider Schritte betrug 41,7%.

Nach der oben beschriebenen Vorschrift wurde eine größere Menge APC6 (M=674g/mol) hergestellt und 100 g (0,15 mol) davon in einer Glasflasche mit 33 g (0,15 mol) N-(2-Aminoethyl(3-aminopropyl))trimethoxysilan gut vermischt. Nach 7 Tagen Lagerung bei Raumtemperatur war keine Doppelbindung mehr nachweisbar im 13C-NMR.

Es werden 133 g eines Gemisches bestehend aus (n-C₆H₁₃)₃SiCH₂CH₂CH₂O(CH₂CH₂O)₆₋₉-C(=O) CH₂CH₂NHCH₂CH₂NH-CH₂CH₂CH₂Si(OMe)₃ und (n-C₆H₁₃)₃SiCH₂CH₂CH₂O(CH₂CH₂O)₆₋₉-C(=O)CH(CH₃)NHCH₂CH₂NHCH₂CH₂CH₂Si(OMe)₃ erhalten.

### Herstellung von Produkt A5

In einem Glaskolben mit Liebigkühler und Vorlage wurden 105 g Glykolsäure-ethoxylat-caprylether (Mn=547 g/mol) (käuflich erhältlich unter der Bezeichnung AKYPO LF 2 bei KAO Chemicals GmbH, D-Emmerich) bei 100°C und 20 mbar gerührt bis sich kein Wasser mehr abscheidet. Nach dem Belüften mit Stickstoff, wurden 45 g (3-Glycidoxypropyl)trimethoxysilan (käuflich erhältlich unter der Marke GENIOSIL^{®} GF 80 bei der Wacker Chemie AG, D-München) und 0,5 g DABCO^{®} (käuflich erhältlich als 1,4-Diazabicyclo[2.2.2]octan bei Sigma-Aldrich Chemie GmbH, D-Taufkirchen) zugegeben und 2 Stunden bei 100°C gerührt. Nach dem Abkühlen und Filtrieren erhält man eine hellgelbe Flüssigkeit. Mittels 13C-NMR und Titration konnte ein Additionsgrad von ca. 85 % festgestellt werden.

Es werden 140 g Produkt erhalten, das hauptsächlich aus folgenden Stoffen besteht:
(CH₃O)₃Si-CH₂CH₂CH₂OCH₂CH(OH)CH₂OC(=O)CH₂-O(CH₂CH₂O)₆₋₁₀-(CH₂)₇CH₃ und (CH₃O)₃Si-CH₂CH₂CH₂OCH₂CH(CH₂(OH))OC(=O)CH₂-O(CH₂CH₂O)₆₋₁₀-(CH₂)₇CH₃.

### Beispiel 1

1400 g eines α,ω-Dihydroxypolydimethylsiloxans mit einer Viskosität von 80 000 mPa·s, 454 g eines trimethylsilylendblockierten Polydimethylsiloxans (PDMS) mit einer Viskosität von 1000 mPa·s und 243 g eines Kohlenwasserstoffgemisches mit einer kinematischen Viskosität (bei 40°C) von 5,9 mm²/s, einer Viskositäts-Dichte-Konstante von 0,79 und einem Siedebereich von 305 bis 340°C wurden in einem Planetenmischer mit 66 g Ethyltriacetoxysilan, 25 g Methyltriacetoxysilan und 3 g Diacetoxyditert.-butoxysilan 5 Minuten vermischt. Anschließend wurden 220 g pyrogener Kieselsäure mit einer spezifischen Oberfläche von 150 m²/g (käuflich erhältlich unter der Marke HDK^{®} V15D bei der Wacker Chemie AG, D-München) eingearbeitet. Nach 20 minütigem Homogenisieren bei 100 hPa wurden 2,4 g Polyalkylenglycol, bestehend aus ca. 13 Ethylenoxid-Einheiten und 1 Propylenoxid-Einheit, mit einer durchschnittlichen Molmasse von 600 g/mol (käuflich erhältlich unter der Bezeichnung PR 600 von der Clariant GmbH, D-Frankfurt am Main), 24 g vom Produkt 1 und 0,24 g Dibutylzinndiacetat bei 100 hPa eingemischt. Das hergestellte Produkt wurde zur Aufbewahrung in feuchtigkeitsdichte Gebinde abgefüllt.

Mit der so erhaltenen Masse wurde Test 1 und Test 2 durchgeführt. Die Ergebnisse finden sich in Tabelle 1.

### Beispiel 2

Die in Beispiel 1 beschriebene Verfahrensweise wird wiederholt mit der Abänderung, dass 24 g Produkt 2 anstelle von Produkt 1 eingesetzt werden.
Die Ergebnisse finden sich in Tabelle 1.

### Beispiel 3

Die in Beispiel 1 beschriebene Verfahrensweise wird wiederholt mit der Abänderung, dass 24 g Produkt 3 anstelle von Produkt 1 eingesetzt werden.
Die Ergebnisse finden sich in Tabelle 1.

### Beispiel 4

Die in Beispiel 1 beschriebene Verfahrensweise wird wiederholt mit der Abänderung, dass 24 g Produkt 4 anstelle von Produkt 1 eingesetzt werden.
Die Ergebnisse finden sich in Tabelle 1.

### Beispiel 5

Die in Beispiel 1 beschriebene Verfahrensweise wird wiederholt mit der Abänderung, dass 24 g Produkt 5 anstelle von Produkt 1 eingesetzt wird.
Die Ergebnisse finden sich in Tabelle 1.

### Vergleichsbeispiel 1 (V1)

Die in Beispiel 1 beschriebene Verfahrensweise wird wiederholt mit der Abänderung, dass kein Produkt A1 eingesetzt wird.
Die Ergebnisse finden sich in Tabelle 1.

### Vergleichsbeispiel 2 (V2)

Die in Beispiel 1 beschriebene Verfahrensweise wird wiederholt mit der Abänderung, dass 24 g N-(Triethoxysilylpropyl)-O-poly-ethylenoxid-urethan mit einer Molmasse von 400-500 (käuflich erhältlich bei ABCR GmbH & Co.KG, D-Karlsruhe) statt Produkt 1 eingesetzt werden.
Die Ergebnisse finden sich in Tabelle 1.

### Vergleichsbeispiel 3 (V3)

Die in Beispiel 1 beschriebene Verfahrensweise wird wiederholt mit der Abänderung, dass 24 g Polyalkylenglycol, bestehend aus ca. 13 Ethylenoxid-Einheiten und 1 Propylenoxid-Einheit, mit einer durchschnittlichen Molmasse von 600 g/mol (käuflich erhältlich unter der Bezeichnung PR 600 von der Clariant GmbH, D-Frankfurt am Main) statt Produkt 1 eingesetzt werden.
Die Ergebnisse finden sich in Tabelle 1.

**Tabelle 1**

| Beispiel | Kontaktwinkel, in Grad | Abrollwinkel 20 µl, in Grad | Abrollwinkel 15 µl, in Grad | Abrollwinkel 10 µl, in Grad | Abrollwinkel 6 µl, in Grad |
|---|---|---|---|---|---|
| 1 | 61 | 5 | 5 | 10 | 20 |
| 2 | 87 | 10 | 15 | 20 | 35 |
| 3 | 66 | 7 | 12 | 20 | 33 |
| 4 | 69 | 10 | 18 | 25 | 38 |
| 5 | 58 | 5 | 8 | 12 | 20 |
| V1 | 104 | >50 | >50 | >50 | >50 |
| V2 | 101 | 26 | 32 | >50 | >50 |
| V3 | 100 | 25 | 38 | >50 | >50 |

## Patentansprüche

1. Unter Ausschluss von Wasser lagerfähige, bei Zutritt von Wasser bei Raumtemperatur zu Elastomeren vernetzbare, einkomponentige Massen auf der Basis von Organosiliciumverbindungen enthaltend Verbindungen der Formel
(R¹O)ₐR₃₋ₐSi-A-O(CH₂CH₂-O)ₓ-R² (I),
wobei
R gleich oder verschieden sein kann und einen einwertigen, gegebenenfalls substituierten Kohlenwasserstoffrest darstellt,
R¹ gleich oder verschieden sein kann und Wasserstoffatom oder einwertigen, gegebenenfalls substituierten Kohlenwasserstoffrest darstellt,
A einen zweiwertigen jeweils über Kohlenstoff an Si und 0 gebundenen, gegebenenfalls substituierten Kohlenwasserstoffrest bedeutet, der gegebenenfalls Hydroxyl-, Ester- (-O-C(=O)-), Amid- (-N-C(=0)-), Urethan- (-O-C(=O)-NH-), Urea- (-N-C(=0)-NH-), Thioester- (-S-C(=O)-), Thioether- (-S-), Ether- (-0-), Imin- (-NH-) und/oder Carbonylgruppen (-C(=O)-) enthält,
R² einen einwertigen, über Kohlenstoff an 0 gebundenen, linearen oder verzweigten Kohlenwasserstoffrest mit 8 bis 22 Kohlenstoffatomen darstellt, wobei ein Kohlenstoffatom durch ein Siliciumatom ersetzt sein kann,
a 1, 2 oder 3 ist und
x eine ganze Zahl von 1 bis 20 ist.

2. Vernetzbare Massen gemäß Anspruch 1, **dadurch gekennzeichnet, dass** es sich bei Rest A um
-CH₂CH₂CH₂OCH₂CH(OH)CH₂OC(=O)CH₂-,
-CH₂CH₂CH₂OCH₂CH(CH₂(OH))OC(=O)CH₂-, -C(=O)-NH-CH₂-CH₂-CH₂-,
-C(=O)-NH-CH₂-, -CH₂CH₂CH₂NHC(=O)CH₂-,
-CH₂CH₂CH₂NHCH₂CH₂NHC(=O)CH₂-, -CH₂CH₂CH₂NHC(=O)NH-CH(CH₃)CH₂-,
-C(=O)CH(CH)CH₂NHCH₂CH₂CH₂-, -C(=O)CH₂CH₂-NHCH₂CH₂CH₂-,
-C(=O)C(CH₃)₂NHCH₂CH₂CH₂-, -C(=O)CH(CH₃)-NHCH₂CH₂CH₂-,
-C(=O)CH(CH₃)CH₂NHCH₂CH₂NHCH₂CH₂CH₂-,
-C(=O)C(CH₃)₂NHCH₂CH₂NHCH₂CH₂CH₂-, -CH₂CH₂CH₂-, -CH₂-,
-C(=O)CH₂CH₂NHCH₂CH₂NHCH₂CH₂CH₂-,
-C(=O)CH(CH₃)NHCH₂CH₂NHCH₂CH₂CH₂-,
-CH₂CH₂CH₂NHCH₂CH(OH)CH₂-, -CH₂CH₂CH₂NHCH₂CH₂NHCH₂CH(OH)CH₂-,
-CH₂CH₂CH₂NHCH(CH₂OH)CH₂- oder -CH₂CH₂CH₂NHCH₂CH₂NHCH(CH₂OH)CH₂ handelt.

3. Vernetzbare Massen gemäß Anspruch 1 oder 2, **dadurch gekennzeichnet, dass** x eine ganze Zahl von 2 bis 10 ist.

4. Vernetzbare Massen gemäß einem oder mehreren der Ansprüche 1 bis 3, **dadurch gekennzeichnet, dass** es sich um solche herstellbar unter Verwendung von
(A) Organosiliciumverbindungen mit mindestens zwei kondensationsfähigen Gruppen und
(B) Verbindungen der Formel (I)
handelt.

5. Vernetzbare Massen gemäß einem oder mehreren der Ansprüche 1 bis 4, **dadurch gekennzeichnet, dass** sie Komponente (B) in Mengen von 0,1 bis 50 Gewichtsteilen, bezogen auf 100 Gewichtsteile Komponente (A), enthalten.

6. Vernetzbare Massen gemäß einem oder mehreren der Ansprüche 1 bis 5, **dadurch gekennzeichnet, dass** es sich um solche handelt, die
(A) Organosiliciumverbindungen enthaltend Einheiten der Formel (II),
(B) Verbindung der Formel (I),
(C) Vernetzer der Formel (IV),
Z_{d}SiR⁵(_{4-d)} (IV),
wobei
R⁵ gleich oder verschieden sein kann und einwertige, gegebenenfalls substituierte Kohlenwasserstoffreste, die durch Sauerstoffatome unterbrochen sein können, bedeutet,
Z gleich oder verschieden sein kann und einen hydrolysierbaren Rest bedeutet und
d 3 oder 4 ist,
sowie deren Teilhydrolysate,
gegebenenfalls
(D) Härtungsbeschleuniger,
gegebenenfalls
(E) Weichmacher,
gegebenenfalls
(F) Füllstoffe,
gegebenenfalls
(G) Haftvermittler und
gegebenenfalls
(H) Additive
enthalten.

7. Verfahren zur Herstellung der Massen gemäß einem oder mehreren der Ansprüche 1 bis 6 durch Vermischen der einzelnen Bestandteile.

8. Formkörper, hergestellt durch Vernetzung der Massen gemäß einem oder mehreren der Ansprüche 1 bis 6 oder hergestellt nach Anspruch 7.

## Claims

1. Single-component compositions, storable under the exclusion of water and crosslinkable upon ingress of water at room temperature to elastomers, based on organosilicon compounds comprising compounds of the formula
(R¹O) ₐR₃₋ₐSi-A-O (CH₂CH₂-O)ₓ-R² (I),
where
R can be identical or different and is a monovalent, optionally substituted hydrocarbon radical,
R¹ can be identical or different and is hydrogen atom or monovalent, optionally substituted hydrocarbon radical, A is a divalent, in each case bonded via carbon onto Si and 0, optionally substituted hydrocarbon radical which optionally contains hydroxyl, ester (-O-C(=O)-), amide (-N-C(=O)-), urethane (-O-C(=O)-NH-), urea (-N-C(=O)-NH-), thioester (-S-C(=O)-), thioether (-S-), ether (-0-), imine (-NH-) and/or carbonyl groups (-C(=O)-), R² is a monovalent, bonded via carbon onto 0, linear or branched hydrocarbon radical having 8 to 22 carbon atoms, where a carbon atom can be replaced by a silicon atom,
a is 1, 2 or 3 and
x is an integer from 1 to 20.

2. Crosslinkable compositions according to Claim 1, **characterized in that** radical A is
-CH₂CH₂CH₂OCH₂CH(OH) CH₂OC (=O) CH₂-,
-CH₂CH₂CH₂OCH₂CH(CH₂(OH))OC(=O)CH₂-, -C(=O)-NH-CH₂-CH₂-CH₂-,
-C(=O)-NH-CH₂-, -CH₂CH₂CH₂NHC(=O)CH₂-,
-CH₂CH₂CH₂NHCH₂CH₂NHC(=O)CH₂, -CH₂CH₂CH₂NHC(=O)NH-CH(CH₃)CH₂-,
-C(=O)CH(CH₃)CH₂NHCH₂CH₂CH₂-, -C(=O)CH₂CH₂-NHCH₂CH₂CH₂-,
-C(=O)C(CH₃)₂NHCH₂CH₂CH₂-, -C(=O)CH(CH₃)-NHCH₂CH₂CH₂-,
-C(=O)CH(CH₃)CH₂NHCH₂CH₂NHCH₂CH₂CH₂ -,
-C(=O)C(CH₃)₂NHCH₂CH₂NHCH₂CH₂CH₂-, -CH₂CH₂CH₂-, -CH₂-,
-C(=O)CH₂CH₂NHCH₂CH₂NHCH₂CH₂CH₂-,
-C(=O)CH(CH₃)NHCH₂CH₂NHCH₂CH₂CH₂-,
-CH₂CH₂CH₂NHCH₂CH(OH)CH₂-,
CH₂CH₂CH₂NHCH₂CH₂NHCH₂CH (OH) CH₂- ,
-CH₂CH₂CH₂NHCH(CH₂OH)CH₂- or-CH₂CH₂CH₂NHCH₂CH₂NHCH(CH₂OH) CH₂.

3. Crosslinkable compositions according to Claim 1 or 2, **characterized in that** x is an integer from 2 to 10.

4. Crosslinkable compositions according to one or more of Claims 1 to 3, **characterized in that** they are those which can be produced using
(A) organosilicon compounds with at least two condensable groups and
(B) compounds of the formula (I).

5. Crosslinkable compositions according to one or more of Claims 1 to 4, **characterized in that** they comprise component (B) in amounts of from 0.1 to 50 parts by weight, based on 100 parts by weight of component (A).

6. Crosslinkable compositions according to one or more of Claims 1 to 5, **characterized in that** they are those which comprise
(A) organosilicon compounds containing units of the formula (II),
(B) compound of the formula (I),
(C) crosslinker of the formula (IV),
Z_{d}SiR⁵_{(4-d)} (IV),
where
R⁵ can be identical or different and is monovalent, optionally substituted hydrocarbon radicals which can be interrupted by oxygen atoms,
Z can be identical or different and is a hydrolyzable radical and
d is 3 or 4,
as well as partial hydrolyzates thereof,
optionally
(D) curing accelerator,
optionally
(E) plasticizer,
optionally
(F) fillers,
optionally
(G) adhesion promoters and
optionally
(H) additives.

7. Method for producing the compositions according to one or more of Claims 1 to 6 by mixing the individual constituents.

8. Molding produced by crosslinking the compositions according to one or more of Claims 1 to 6 or produced according to Claim 7.

## Revendications

1. Matières monocomposantes stockables avec exclusion de l'eau, réticulables en élastomères à température ambiante lors de l'introduction d'eau, à base de composés d'organosilicium contenant des composés de formule
(R¹O)ₐR₃₋ₐSi-A-O(CH₂CH₂-O)ₓ-R² (I),
dans laquelle
les R peuvent être identiques ou différents et représentent un radical hydrocarboné monovalent, éventuellement substitué,
les R¹ peuvent être identiques ou différents et représentent un atome d'hydrogène ou un radical hydrocarboné monovalent, éventuellement substitué,
A signifie un radical hydrocarboné bivalent, relié à chaque fois par un carbone à Si et O, éventuellement substitué, qui contient éventuellement des groupes hydroxyle, ester (-O-C(=O)-), amide (-N-C(=O)-), uréthane (-O-C(=O)-NH-), urée (-N-C(=O)-NH-), thioester (-S-C(=O)-), thioéther (-S-), éther (-0-), imine (-NH-) et/ou carbonyle (-C(=O)-),
R² représente un radical hydrocarboné monovalent, relié par un carbone à 0, linéaire ou ramifié, de 8 à 22 atomes de carbone, un atome de carbone pouvant être remplacé par un atome de silicium,
a représente 1, 2 ou 3, et
x représente un nombre entier de 1 à 20.

2. Matières réticulables selon la revendication 1, **caractérisées en ce que** le radical A consiste en -CH₂CH₂CH_{2O}CH₂CH(OH)CH₂OC(=O)CH₂-, CH₂CH₂CH₂OCH₂CH(CH₂(OH))OC(=O)CH₂-, -C(=O)-NH-CH₂-CH₂-CH₂-, -C(=O)-NH-CH₂, -CH₂CH₂CH₂NHC(=O)CH₂-,-CH₂CH₂CH₂NHCH₂CH₂NHC(=O)CH₂-, -CH₂CH₂CH₂NHC(=O)NH-CH(CH₃)CH₂-, -C(=O)CH(CH₃)CH₂NHCH₂CH₂CH₂-, -C(=O)CH₂CH₂-NHCH₂CH₂CH₂-, -C(=O)C(CH₃)₂NHCH₂CH₂CH₂-, -C(=O)CH(CH₃)-NHCH₂CH₂CH₂-, -C(=O)CH(CH₃)CH₂NHCH₂CH₂NHCH₂CH₂CH₂-,-C(=O)C(CH₃)₂NHCH₂CH₂NHCH₂CH₂CH₂-, -CH₂CH₂CH₂-, -CH₂-,-C(=O)CH₂CH₂NHCH₂CH₂NHCH₂CH₂CH₂-, C(=O)CH(CH₃)NHCH₂CH₂NHCH₂CH₂CH₂-, -CH₂CH₂CH₂NHCH₂CH(OH)CH₂-, -CH₂CH₂CH₂NHCH₂CH₂NHCH₂CH(OH)CH₂-,-CH₂CH₂CH₂NHCH(CH₂OH)CH₂- ou-CH_{2C}H₂CH₂NHCH₂CH₂NHCH(CH₂OH)CH₂.

3. Matières réticulables selon la revendication 1 ou 2, **caractérisées en ce que** x représente un nombre entier de 2 à 10.

4. Matières réticulables selon une ou plusieurs des revendications 1 à 3, **caractérisées en ce qu'**il s'agit de matières pouvant être fabriquées en utilisant
(A) des composés d'organosilicium contenant au moins deux groupes condensables et
(B) des composés de formule (I).

5. Matières réticulables selon une ou plusieurs des revendications 1 à 4, **caractérisées en ce qu'**elles contiennent le composant (B) en quantités de 0,1 à 50 parties en poids, par rapport à 100 parties en poids du composant (A).

6. Matières réticulables selon une ou plusieurs des revendications 1 à 5, **caractérisées en ce qu'**il s'agit de matières qui contiennent
(A) des composés d'organosilicium contenant des unités de formule (II),
(B) un composé de formule (I),
(C) des agents de réticulation de formule (IV),
Z_{d}SiR⁵_{(4-d)} (IV),
dans laquelle
les R⁵ peuvent être identiques ou différents et signifient des radicaux hydrocarbonés monovalents, éventuellement substitués, qui peuvent être interrompus par des atomes d'oxygène,
les Z peuvent être identiques ou différents et signifient un radical hydrolysable, et
d représente 3 ou 4,
ainsi que leurs hydrolysats partiels,
éventuellement
(D) des accélérateurs de durcissement,
éventuellement
(E) des plastifiants,
éventuellement
(F) des charges,
éventuellement
(G) des promoteurs d'adhésion et
éventuellement
(H) des additifs.

7. Procédé de fabrication des matières selon une ou plusieurs des revendications 1 à 6 par mélange des constituants individuels.

8. Corps moulé, fabriqué par réticulation des matières selon une ou plusieurs des revendications 1 à 6 ou fabriquées selon la revendication 7.
